(19) Europäisches Patentamt
European Patent Office
Office européen des brevets

(11) **EP 3 996 230 A1**

(12) **EUROPEAN PATENT APPLICATION**

(43) Date of publication:
**11.05.2022 Bulletin 2022/19**

(21) Application number: **20306342.5**

(22) Date of filing: **06.11.2020**

(51) International Patent Classification (IPC):
*H02J 3/32* *(2006.01)*    *H02J 3/38* *(2006.01)*

(52) Cooperative Patent Classification (CPC):
**H02J 3/32; H02J 3/381;** H02J 2300/22;
H02J 2300/24; H02J 2300/28

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Schneider Electric Industries SAS
92500 Rueil-Malmaison (FR)**

(72) Inventor: **KAMAJAYA, Samuel
38000 GRENOBLE (FR)**

(74) Representative: **Lavoix
62, rue de Bonnel
69448 Lyon Cedex 03 (FR)**

(54) **METHOD FOR OPERATING A NETWORK, RELATED CONTROLLER, NETWORK COMPRISING SUCH A CONTROLLER, RELATED COMPUTER PROGRAM PRODUCT AND INFORMATION MEDIUM**

(57)    The invention relates to a method for operating a network (10) comprising an electrical grid (35), a set of devices (15, 20, 25, 30) and a controller (40), the set of devices (15, 20, 25, 30) comprising at least one electricity source (15), at least one storage device (25) and at least one electricity-consuming device (20), the grid (35) being configured to transmit electrical currents between the devices (15, 20, 25, 30), each electricity source (15) being configured to supply the grid (35) with a first electrical current, the grid (35) being configured to supply each electricity-consuming device (20) with a second electrical current, each storage device (25) being able to receive the second electrical current from the grid (35) and to supply the grid (35) with a third electrical current, the second electrical current(s) being formed from the electrical current(s) supplied to the grid (35).

FIG.1

EP 3 996 230 A1

**Description**

The present invention relates to a method for operating a network comprising an electrical grid. The present invention also concerns a related computer program product and information medium, as well as a controller configured to implement such a method and a network comprising an electrical grid and such a controller.

Many electrical networks comprise a mixture of electricity sources of different types and of electricity-consumer devices or installations. In some cases, electricity storage devices are also provided, in order to store some of the energy generated during periods where production capacity exceeds demand and to give this energy back during high-demand, low-production periods.

Such storage devices are in particular useful when the network comprises non-pilotable energy sources such as sun-powered or wind-powered sources, but may also be used in order to use energy sources whose maximum power is inferior to the maximum demand, in which case the difference is made up for by the energy stored in the device. The use of storage device is, notably, very important in small-scale network that are not directly, or intermittently, related to a wider network that would be able to compensate for the excess demand.

In order to store the electrical energy, batteries are conventionally used, although other types of storage devices may be considered. However, the presence of the storage devices makes the network significantly more complex to design, build and operate. In particular, the life expectancy of electrical storage devices is often inferior to that of the other components of the network, and the capacity of the storage devices (i.e. the maximum amount of energy that can be stored in the device at any given time) may vary, and in particular decrease, over time. The storage devices must therefore be monitored closely, maintained properly and sometimes replaced altogether, when their capacities have decreased too much.

There is therefore a need for a method for operating an electrical network comprising electricity storage devices and electricity sources, that makes the operation of the network, and notably its maintenance, simpler.

In this aim, the following specification discloses a method according to claim 1.

According to preferred but optional embodiments, the method is according to any one of claims 2 to 8.

The following specification also concerns a computer program product according to claim 9, as well as an information medium according to claim 10.

The following specification also relates to a controller according to claim 11, and to an electrical network according to claim 12.

Features and advantages of the invention will appear in view of the following specification, given only as a non-limiting example, and with respect to the attached drawings, in which:

- Figure 1 is a schematics of an example of an electrical network according to the invention,
- Figure 2 is a flowchart of the steps of a first example of a method for operating the network of figure 1, and
- Figure 3 is a flowchart of the steps of a second example of a method for operating the network of figure 1.

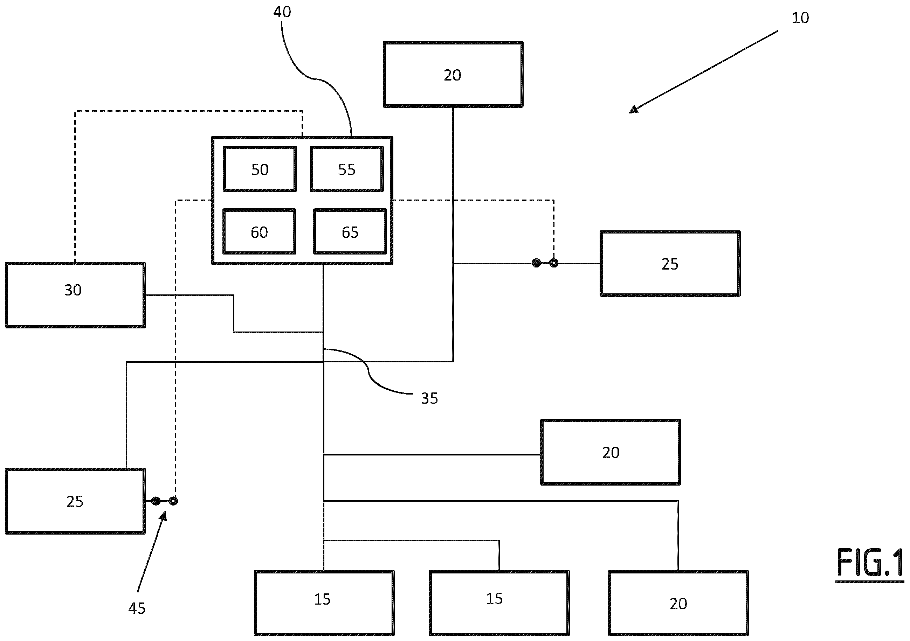

An example of electrical network 10 is shown on figure 1.

The network 10 comprises a set of devices, the set of devices comprising at least one electrical source 15, for example a plurality of electrical sources 15, at least one electricity-consuming device 20, notably a plurality of electricity-consuming devices 20, at least one electricity storage device 25 and, optionally, at least one generator 30.

The network 10 is, for example, an autonomous network, i.e. a network that is not connected to another network. For example, the network 10 is a network of an island, or of a remote geographical location. In other cases, the network 10 is a network that must keep the capacity to function independently from all other possible networks for security reasons, such as a network of a sensitive installation, for example a hospital, a military installation, or an airport.

However, cases where the network 10 may be connected to and at least partially supplied with electricity by another network are also envisioned.

The network 10 also comprises an electrical grid 35 and a controller 40.

Each electrical source 15 is configured to generate a first electrical current and to supply the electrical grid 35 with the first electrical current.

Each electrical source 15 is, for example, a renewable-energy source.

Sun-powered energy sources and wind-powered energy sources are examples of renewable energy sources.

At least one electrical source 15 is, in particular, non-dispatchable (or "intermittent"), i.e. its power cannot be entirely controlled at will by operators. Sun-powered energy sources and wind-powered energy sources are examples of non-dispatchable electrical sources.

In particular, at least one electrical source 15 is, for example, a photovoltaic system configured to generate the first electrical current using the photovoltaic effect, such as a set of solar cells.

In a variant, at least one electrical source 15 is a concentrated solar power source, using sunlight to heat up a steam-generating device, the first current being generated by an alternator powered by a steam-driven turbine.

However, it should be noted that any kind of sun-powered source may be considered.

In another variant, at least one electrical source is a wind turbine or a set of wind turbines such as a wind farm.

Each electricity-consuming device 20 is configured to be supplied with an electrical current, called second electrical current, in order to perform a function. Electricity-consuming devices include household appliances, industrial installations such as furnaces, public lighting, among many others.

It should be noted that the number of electricity-consuming device 20 in the network 10 may vary greatly depending on the network's size.

Each electricity storage device 25 is configured to receive a respective second current from the grid 35.

Each electricity storage device 25 is, also, configured to store the received electrical energy, to generate a third electrical current from the stored energy and to supply the third current to the electrical grid 35.

Each electricity storage device is, for example, a battery.

A battery comprises one or more electrochemical cells, converting the energy received as the second current into chemical energy through electrochemical reactions.

A maximum charge C (or "capacity") is defined for each storage device 25. The maximum charge C is the maximum amount of energy that can be stored at a given time in the storage device 25.

A maximum number of charges N is defined for each storage device 25. The maximum number of charges N is a number of times that the storage device 25 is designed to be charged without significant disruption. For example, the storage device is designed to work properly at least until the maximum number of charges N has been reached, while the storage device 25's correct operation is not ensured after the maximum number of charges N has been performed.

The maximum number of charges is, for example, evaluated upon statistical analysis of a number of storage devices 25 of a same type, and is typically guaranteed by the storage device's manufacturer.

In particular, before the maximum number of charges N, and discharges, has been performed, the maximum charge C is superior or equal to a predetermined charge threshold, for example to 80 % of the initial maximum charge C of the electricity storage device 25, i.e the capacity of the electricity storage device 25 when the electricity storage device 25 was manufactured. The maximum number of charges N is, notably, defined by the maximum charge C being likely to decrease below the charge threshold after the maximum number of charges (and discharges) N has been performed.

The maximum number of charges N is, for example, comprised between 4000 and 6000. However, this number N may vary.

An expected lifetime L is defined for each storage device 25.

The expected lifetime L is, for example, a time period during which the storage device 25 is expected to operate properly, and after which correct operation of the storage device 25 is not certain.

The expected lifetime L is, for example, comprised between 8 and 12 years...

Each generator 30 is configured to generate a fourth electrical current and to supply the fourth electrical current to the electrical grid 35.Each generator 30 is a dispatchable electricity source, such as a fossil fuel generator, a nuclear power plant, a hydroelectric dam, a biomass power generator, or a geothermal power plant.

Each generator 30 is, in particular, a fossil fuel generator, designed notably to generate the fourth electrical current by burning coal, gaz, petroleum or petroleum-derived fuels.

An efficiency is defined for each generator 30. The efficiency is a ratio between, at the numerator, a power of the generated fourth current and, at the denominator, a consumption rate of the fossil fuel.

A lower power limit is defined for each generator 30. The lower power limit is such that, when the power of the fourth current is superior or equal to the lower power limit, the efficiency of the generator is superior or equal to an efficiency threshold and, when the power of the fourth current is strictly inferior to the lower power limit, the efficiency of the generator is strictly inferior to the efficiency threshold.

The lower power limit is, for example, equal to 30 % of the maximum power of the generator 30.

An upper power limit is defined for each generator 30.

The upper power limit is, for example, fixed by the network's operator.

For example, the upper power limit is chosen so that the remaining generator capacity (i.e the amount of power greater than the upper power limit that the generator 30 can deliver if needed) corresponds to expected or possible loads that are likely to appear from time to time, in case of increased demand.

In some cases, the upper power limit is such that the generator cannot generate a fourth current having a power strictly superior to the upper power limit without risking a malfunction.

The electrical grid 35 is configured to transfer electrical energy, as electrical currents, between the devices 15, 20, 25 and 30 of the set of devices.

In particular, the electrical grid 35 is configured to, at some moments, receive the first, third (and optionally fourth) electrical currents from the source(s) 15, the storage device(s) 25 (and optionally the generator(s) 30) and to supply the electricity-consuming device(s) 20 with the corresponding second currents, the second current(s) being generated from the electrical currents received by the grid 35.

In addition, the electrical grid 35 is configured to, at other moments, receive the first, (and optionally fourth) electrical currents from the source(s) 15, (and optionally the generator(s) 30) and to supply the electricity-consuming device(s) 20 and the storage device(s) with the corresponding second currents, the second current(s) being generated from the electrical currents received by the grid 35.

The electrical grid 35 is, further, configured to connect or disconnect, from the grid 35, devices among the set of devices.

In particular, the electrical grid 35 comprises at least one switch 45, commanded by the controller 40, configured each to connect or disconnect a corresponding device among the set of devices, for example a storage device 25.

In a mode of implementation, at least one switch 45 is configured to connect or disconnect the generator 30.

In a per se known manner, the grid 35 further comprises at least one converter configured to convert the currents received or generated by the storage device(s) 25 into the type of current circulating in the grid 35, for example a AC/DC or DC/AC converter, and/or at least one transformer able to convert the voltage of the storage device 25 into the voltage of the grid 35 and vice versa.

The controller 40 is configured to monitor and control the operation of the network 10, notably the operation of the grid 35 and of the source(s) 15 and generator(s) 30.

The controller 40 is notably configured to send commands to the source(s) 15, to the switch(s) 45 and/or to the generator(s) 30 and to the storage device 25.

The controller 40 comprises, for example, a data processing unit, such as a processor 50, a memory 55 and a reader 60 of a legible information medium 65.

It should be noted that, in other embodiments, the processor 50, memory 55 and reader 60 are replaced by a set of programmable electronic components or by one or more dedicated electronic circuits such as application-specific integrated circuits.

The information medium 65 is, for example, part of a computer program product.

A legible information medium 65 is a medium legible by the data processing unit 50. The legible information medium 65 is a medium suitable for storing in memory electronic instructions and capable of being coupled with a bus of a computer system.

As an example, the legible information medium 65 is an optical disc, a CD-ROM, a magneto-optical disc, a ROM memory, a RAM memory, an EPROM memory, an EEPROM memory, a magnetic card or an optical card.

On the legible information medium 65, a program comprising program instructions is stored in memory.

The computer program may be loaded on the data processing unit 50 and is adapted for causing the application of a method for operating the network 10 when the computer program is applied on the processor 50.

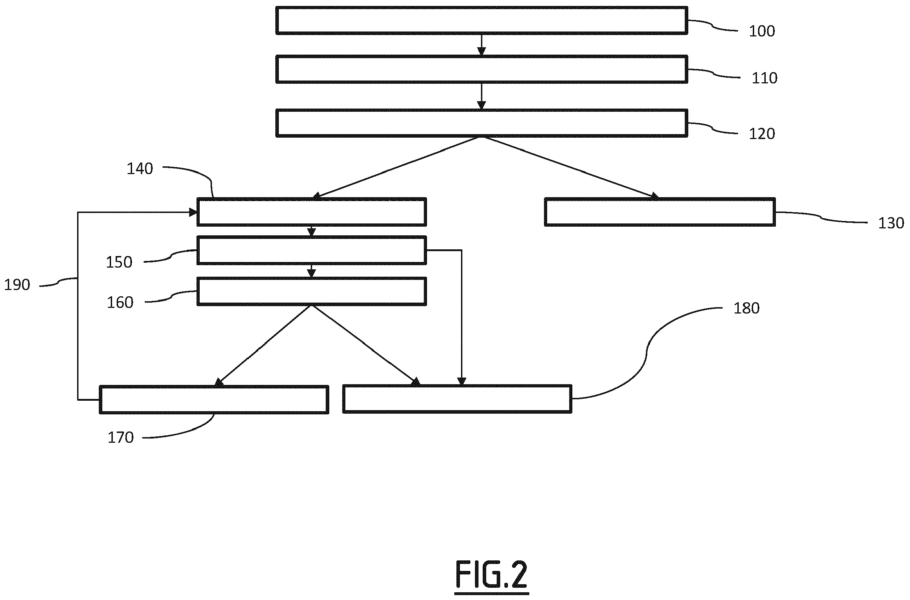

The operation of the network 10 will now be explained with reference to figure 2, which shows a flowchart of a first example of a method for operating the network 10.

The method is notably implemented by the controller 40.

The method comprises a first generation step 100, an estimation step 110, a first comparison step 120, a discharge step 130, a first calculation step 140, a second comparison step 150, a second calculation step 160, a charging step 170 and a disconnection step 180.

During the first generation step 100, at least one source 15, for example each sources 15, generate the corresponding first current and supplies the first current to the grid 35.

Each source 15 that transmits the corresponding first current to the grid 35 is called "active source" 15 below.

During the first generation step 100, any generator(s) 30 is(are) for example turned off and do not produce any power.

During the estimation step 110, the controller 40 estimates an instantaneous power of the active source(s) 15. The instantaneous power is the power of the first current if only one source 15 is active, or the sum of the powers of the first current(s) generated by all active sources 15 if more than one source 15 is active.

The controller 40 also estimates a total required power. The total required power is the sum of the powers of the second currents consumed by the consuming devices 20.

The total required power is, for example, estimated using power meters that measure the power consumed by each consuming device 20. In a variant, the total required power is estimated by adding the powers produced by each source 15, each storage device 25 and/or each generator 30.

During the first comparison step 110, the total required power is compared with the instantaneous power by the controller 40.

If the instantaneous power is strictly inferior to the required power, the discharge step 130 is implemented.

If the instantaneous power is equal to the required power, no action is required from the controller 40.

If the instantaneous power is strictly superior to the required power, the calculation step 140 is implemented.

During the discharge step 130, the controller 35 commands at least one storage device 25 to supply the corresponding third current to the grid 35. This ensures notably that the available electrical power is made equal to the required power.

During the first calculation step 140, the controller 40 calculates a total electrical charge received by at least one, for example each, storage device 25.

The total electrical charge is the total electrical energy received by the storage device 25, from the grid 35, during a time period having a predetermined length.

In a possible variant, the total electrical charge is the total electrical energy discharged by the storage device 25, to the grid 35, during said time period.

The predetermined length is, for example, a 24-hour time period. Alternatively, the predetermined length is a 1-week time period, a 1-month time period, or a 1-hour time period.

It should be noted that the length of the time period may be different from the examples give above.

The time period is, for example, a time period stating at a predetermined time instant. In this case the time instant is, for example, the most recent time instant in a set of time instants, a time duration between successive time instants being equal to the predetermined length.

In the case where the time period's length is 24 hours, each time period begins, for example, at a predetermined hour every day, for example midnight. In other words, during each first calculation step 140, the controller calculates the total amount of electrical energy received or discharged by the storage device 25 from the grid 35 since midnight the same day.

In a variant, the time period is a rolling time period, the beginning of which is defined as being separated from the time instant of calculation by the predetermined length. In this case, when performing the first calculation step 140, the controller calculates the total amount of electrical energy received by the storage device 25 from the grid 35 since the same time the day before, or since the same time seven days before, and so on, depending on the length of the time period.

During the second comparison step 150, the controller 40 compares the total electrical charge to a first threshold T1.

The first threshold T1 is, for example, calculated according to the equation:

$$T1 = \frac{N \times C}{L} \qquad \text{(Equation 1)}$$

Wherein:

T1 is the first threshold,
N is the maximum number of charges,
C is the maximum charge, and
L is the expected lifetime, expressed as a multiple of the length of the time period (for example, if the expected lifetime is 20 years and the time period's length is 24 hours, the parameter L is equal to 7300).

If the total electrical charge is strictly inferior to the first threshold T1, the second calculation step 160 is implemented.

In a possible variant, if the total electrical charge is strictly inferior to the first threshold T1, the charging step 170 is implemented. In this variant, step 160 is not implemented.

If the total electrical charge is superior or equal to the first threshold, the disconnection step 180 is implemented.

During the second calculation step 160, a difference between the total electrical charge and the first threshold T1 is calculated by the calculator 40.

The difference is compared to a second threshold T2. The second threshold T2 is, for example, comprised between 1 % and 5% of the maximum charge C when the storage device 25 is manufactured, i.e the nominal capacity of the device 25.

If the difference is superior or equal to the second threshold T2, the charging step 170 is implemented.

If the difference is strictly inferior to the second threshold T2, the disconnection step 180 is implemented.

During the charging step 170, the controller 40 commands the storage device 25 to be charged by the grid 25 using a respective second current.

For example, the controller 40 commands a corresponding switch 45 to close in order to connect the storage device 25 to the grid 35.

The steps 140 and 150 are, in some embodiments, repeated periodically during the charging step 170, so as to disconnect the storage device 25 when the total electrical charge reaches the first threshold. This is shown by an arrow 190 on figure 2.

During the disconnection step 180, the controller 40 commands a disconnection of the storage device 25 from the grid 35. For example, the controller 40 commands a corresponding switch 45 to open in order to disconnect the storage device 25 from the grid 35.

The controller 40 further commands, for example, at least one source 15 to disconnect from the grid 35 or to reduce the power generated by the source 15, so as to equalize the sums of the currents received and supplied by the grid 35.

Thanks to the use of the steps 140, 150 and 180, the charging of the storage device 25 with electrical energy is conditioned to circumstances where the total electrical charge received by the storage device 25 is inferior or equal to the first threshold. Therefore, the controller 40 prevents the storage device from being charged so frequently that the storage device 25 deteriorates at an unacceptable rate.

The operation of the network 10 is thus simplified, because the rate of replacement of the storage device(s) 25 is reduced.

In addition, since the criterion for deciding whether to charge or disconnect the storage device 25 is a very simple one (comparison of the received power to the first threshold), the method can be implemented by a very simple controller 40, particularly adapted for independent or autonomous networks 10, without requiring a large amount of calculation time.

In particular, when the first threshold is calculated using equation 1, the total electrical charge received by the storage device 25 at any point of its life does not exceed an amount that would, if repeated over the expected lifetime of the storage device, lead the total electrical charge to exceed the amount that the storage device 25 is intended to receive harmlessly during its lifetime.

The use of the step 160 prevents the storage device 25 to be charged with very small quantities of electricity for very short times. By reducing the total number of charges of the storage device 25, this also increases the lifetime of the storage device 25.

Such methods are particularly interesting when the sources 25 are sun- or wind-powered, and the total power of the source(s) 25 therefore varies frequently in a non-controllable manner, which increases the need for storing the excess electricity.

A time period lasting 24 hours is particularly adapted to the usual 24 hour periodicity of the uses of electricity in electrical networks, as well as the relative periodicity of sun-powered sources 25.

Having each time period starting at a predetermined time and lasting 24 hours enables the method to be easily implemented on a simple controller 40.

When generators 30 run at less than 30 % of their maximal power, their efficiency is usually lower than it is at higher powers. In addition, running below 30% usually causes increased wet stacking, which can decrease the generator's efficiency further over time and eventually lead to failure caused by soot deposition. It should be noted that the first example of method disclosed above can be implemented by networks 10 devoid of any generator 30.

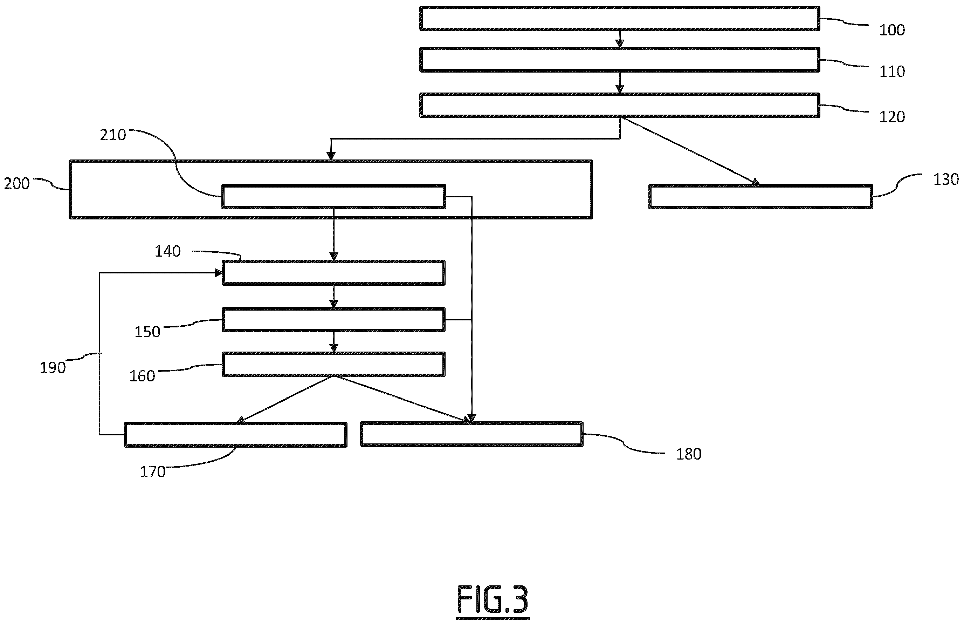

A second example of method for operating the network 10 will now be disclosed with respect to figure 3, which shows a flowchart of the second example.

The steps that are identical to the steps of the first example are not described again. Only the differences are highlighted.

If the instantaneous power is strictly inferior to the required power during step 120, a second generation step 200 is implemented.

During the second generation step 200, the controller 40 commands the generator 30 to generate the corresponding fourth current and to supply the fourth current to the grid 35.

The second generation step 200 comprises, for example, a third comparison step 210.

During the third comparison step 210, a power of the fourth current (notably equal to the difference between the total required power and the instantaneous power of the source(s) 15) is compared to a fourth threshold.

The fourth threshold is, in particular, equal to the lower limit of the generator 30.

If the power of the fourth current is superior or equal to the fourth threshold, either:

- the disconnection step 180 is implemented if the difference is inferior or equal to the upper limit of the generator 30 (in particular, the controller 40 considers that the storage device 25 is not required since the generator 30 can supply the required power), or

- if the difference is strictly superior to the upper limit, the controller 40 commands the storage device 25 to be connected to the grid 25, so as to supply the grid 25 with the third current.

If the power of the fourth current is strictly inferior to the fourth threshold, the controller 30 implements steps 140, 150 and 160, as described here-above.

However, if the controller 40 determines, at step 150, that the total electrical charge is inferior to first threshold T1 and, at step 160, that the difference between the total electrical charge and the first threshold T1 is strictly inferior to the second threshold T2, the controller 40 commands the generator 30 to increase the power of the fourth current generated by the generator 30, and implements charging step 170 (using the excess power generated by the generator 30 to charge the storage device 25).

In any other case, the controller 40 implements disconnection step 180.

The use of the second generation step 200 and of third comparison step 210 enables the controller to not only use the generator 30 to compensate for a discrepancy between the power required by the consuming devices 20 and the power provided by the source(s) 25, but also to use the storage device 25 to store the excess energy provided by the generator 30, thereby enabling the generator 30 to work at a higher power than it would otherwise.

Since the efficiency of the generators tends to decrease when the generated power is low, the efficiency of the generator 30 is therefore higher than if the storage device 25 was charged.

However, by using steps 140 to 160, the controller also ensures that the storage device 25 is not prematurely damaged by repetitive charges, thereby limiting the need for a maintenance of the network 10, and notably the need for replacing the storage device 25.

While the methods above have been described as if only one storage device 25 was charged or disconnected (i.e only the total electrical charge of one device is evaluated), the method can of course be applied similarly to cases where a plurality of storage devices 25 are available to be charged by the excess power provided by either the source(s) 15 or the generator(s) 30.

Similarly, the methods can be implemented with any number of source(s) 15 and/or of generator(s) 30.

**Claims**

1. A method for operating a network (10) comprising an electrical grid (35), a set of devices (15, 20, 25, 30) and a controller (40), the set of devices (15, 20, 25, 30) comprising at least one electricity source (15), at least one storage device (25) and at least one electricity-consuming device (20), the grid (35) being configured to transmit electrical currents between the devices (15, 20, 25, 30) of the set of devices (15, 20, 25, 30), each electricity source (15) being configured to supply the grid (35) with a respective first electrical current, the grid (35) being configured to supply each electricity-consuming device (20) with a respective second electrical current, each storage device(s) (25) being able to receive the corresponding second electrical current from the grid (35) and to supply the grid (35) with a respective third electrical current, the second electrical current(s) being formed from the electrical current(s) supplied to the grid (35),
the method comprising the following steps:

> a) Generation (100), by at least one active source (15) among said electricity source(s) (15), of a respective first electrical current, each first electrical current being transmitted to the electrical grid (35),
> b) Estimation (110), by the controller (140), of an instantaneous power of the active source(s) (15), and of a total required power required by the electricity-consuming device(s) (20), the instantaneous power being a total power of the active source(s) (15),
> c) Comparison (120), by the controller (40), of the instantaneous power and the total required power, and, if the instantaneous power is greater than the total required power,
>
> > ○ the controller (40) calculating (140) a total electrical charge received or discharged by at least one storage device (25) during a time period, the time period having a predetermined length, and
> > ○ the controller (40) comparing (150) the total electrical charge to a predetermined first threshold and, depending on the results of the comparison, either commanding (170) a charge of the storage device (25) considered with a second electrical current or commanding (180) a disconnection of the storage device (25) considered from the grid (35), the storage device (25) being disconnected if the total electrical charge is superior or equal to the first threshold.

2. The method according to claim 1, further comprising, if the total electrical charge is strictly inferior to the first threshold, a step (160) for comparing a difference between the total electrical charge and the first threshold to a second threshold, the storage device (25) being disconnected (180) if the difference is inferior or equal to the second threshold.

3. The method according to claim 1 or 2, wherein the time period is a time period beginning at a predetermined time instant, the time instant being the most recent time instant of a set of time instants, successive time instants of the set being separated from each other by 24 hours.

4. The method according to any one of claims 1 to 3, wherein the first threshold is equal to the ratio of a first quantity divided by a second quantity, the first quantity being a product of a maximum charge of the storage device (25) multiplied with a maximum number of charges of the storage device (25) and with a length of the time period, the second quantity being an expected lifetime of the storage device (25), expressed as a multiple of said time period, the maximum number of charges being a number of charges beyond which the maximum charge of the storage device (25) decreases under a predetermined third threshold.

5. The method according to any one of claims 1 to 4, wherein the or each source (15) is a sun-powered or wind-powered electricity source.

6. The method according to any one of claims 1 to 5, wherein the network (10) further comprises at least one generator (30) able to generate a corresponding fourth electrical current and to supply the grid (35) with the fourth electrical current, the method further comprising the following steps:
d) if the instantaneous power is strictly inferior to the total required power, generation (200) of the fourth electrical current by the generator (30).

7. The method according to claim 6, wherein step g) further comprises, if a power generated by the generator (30) is strictly inferior to a fourth threshold, comparing (210) the total electrical charge to the predetermined first threshold and, depending on the results of the comparison, either

> - increasing the power generated by the generator (30) and charging (170) the storage device (25) considered with a second electrical current, or
> - disconnecting (180) the storage device (25) considered from the grid, the storage device (25) being disconnected if the total electrical charge is superior or equal to the first threshold.

8. The method according to claim 7, wherein the fourth threshold is equal to 30 percents of a maximum power of the generator (30)

9. A computer program product comprising software instructions that implement a method according to any one of claims 1 to 8 when the instructions are executed by a controller (50).

**10.** An information medium (65) on which is stored in memory a computer program product according to claim 9.

**11.** A controller (40) configured to implement a method according to any one of claims 1 to 8.

**12.** A network (10) comprising an electrical grid (35), a set of devices (15, 20, 25, 30) and a controller (40), the set of devices (15, 20, 25, 30) comprising at least one electricity source (15), at least one storage device (25) and at least one electricity-consuming device (20), the grid (35) being configured to transmit electrical currents between the devices (15, 20, 25, 30) of the set of devices (15, 20, 25, 30), each electricity source (15) being configured to supply the grid (35) with a respective first electrical current, the grid (35) being configured to supply each electricity-consuming device (20) with a respective second electrical current, each storage device(s) (25) being able to receive a second electrical current from the grid (35) and to supply the grid (35) with a respective third electrical current, the second electrical current(s) being formed from the electrical current(s) supplied to the grid (35), the network (10) being configured to implement a method according to any one of claims 1 to 8.

FIG.1

FIG.2

FIG.3

Europäisches Patentamt

European Patent Office

Office européen des brevets

# EUROPEAN SEARCH REPORT

Application Number

EP 20 30 6342

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2016 093050 A (TAKAOKA TOKO CO LTD; TOKYO ELECTRIC POWER CO INC:THE) 23 May 2016 (2016-05-23) * paragraph [0024] - paragraph [0040]; figure 1 * * paragraph [0088] - paragraph [0143]; figures 11-22 * * paragraph [0050] - paragraph [0060] * ----- | 1-12 | INV. H02J3/32 H02J3/38 |
| X | KHOA LE DINH ET AL: "Centralized BESS control to minimize demand of PV-supplied micro-grid under voltage constraints", POWER AND ENERGY (PECON), 2012 IEEE INTERNATIONAL CONFERENCE ON, IEEE, 2 December 2012 (2012-12-02), pages 864-869, XP032327048, DOI: 10.1109/PECON.2012.6450297 ISBN: 978-1-4673-5017-4 * page 864 - page 865 * ----- | 1-12 | |

TECHNICAL FIELDS SEARCHED (IPC)

H02J

The present search report has been drawn up for all claims

| Place of search | Date of completion of the search | Examiner |
|---|---|---|
| Munich | 27 March 2021 | Mäki-Mantila, Harri |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 996 230 A1**

## ANNEX TO THE EUROPEAN SEARCH REPORT
## ON EUROPEAN PATENT APPLICATION NO.

EP 20 30 6342

27-03-2021

| Patent document cited in search report | Publication date | Patent family member(s) | Publication date |
|---|---|---|---|
| JP 2016093050 A | 23-05-2016 | JP 6630038 B2<br>JP 2016093050 A | 15-01-2020<br>23-05-2016 |

EPO FORM P0459

For more details about this annex : see Official Journal of the European Patent Office, No. 12/82